# EUROPEAN PATENT APPLICATION

(11) **EP 4 844 039 A1**
(43) Date of publication of application: **25.11.2026**
(21) Application number: 26180164.1
(22) Date of filing: 21.05.2026
(51) Int. Cl.: C09J 7/10, C09J 133/04, H01M 50/227, H01M 50/231, H01M 50/242, C08K 9/10

(54) **HIGH-ELASTICITY ADHESIVE FILM FOR ALL-SOLID-STATE BATTERY STACK AND ALL-SOLID-STATE BATTERY STACK COMPRISING THE SAME**

(30) Priority: 22.05.2025 KR 20250066951
(71) Applicant: Innox Advanced Materials CO., Ltd., Asan-si, Chungchongnam-do 31409 (KR)
(72) Inventor: JANG, Jae woo, 31409 Asan-si (KR); OH, Eun Seo, 31409 Asan-si (KR); KIM, Hyung Jin, 31409 Asan-si (KR); YOO, Sung Ju, 31409 Asan-si (KR)
(74) Representative: Winter, Brandl - Partnerschaft mbB

(57) **Abstract**

The invention relates to an elastic adhesive film disposed between all-solid-state batteries of an all-solid-state battery stack. The elastic adhesive film comprises 10 to 40 wt% of a urethane acrylate binder, 55 to 82 wt% of an acrylate monomer, 0.1 to 2 wt% of an ultraviolet (UV) initiator, and 2.4 to 10 wt% of hollow particles, the urethane acrylate binder including an acrylate group at at least one terminal of polyurethane.

## Description

### TECHNICAL FIELD

Embodiments of the invention relate generally to an elastic sheet for an all-solid-state battery and an all-solid-state battery comprising the same, and more particularly, to an elastic sheet for an all-solid-state battery stack having high elasticity and high-stress deformation characteristics, and an all-solid-state battery stack comprising the same.

### DISCUSSION OF THE BACKGROUND

An all-solid-state battery is defined as a next-generation battery in which a conventional liquid electrolyte between a positive electrode and a negative electrode is replaced with a solid electrolyte. Such an all-solid-state battery has been known to have high energy density and excellent safety.

The all-solid-state battery may exhibit significant volumetric expansion or contraction depending on temperature or operating conditions. Accordingly, there is a need for an elastic film capable of being repeatedly compressed and recovered in response to volume changes of the all-solid-state battery to stabilize the battery volume.

A conventional elastic film for an all-solid-state battery has been primarily manufactured using an acrylate binder and an acrylate monomer. However, the conventional high-elasticity film for an all-solid-state battery has not achieved excellent results in both compression and recovery properties, which is decided to be due to the use of an acrylate binder.

The above information disclosed in this Background section is only for understanding of the background of the inventive concepts, and, therefore, it may contain information that does not constitute prior art.

### SUMMARY

Embodiments of the invention are capable of providing a high-elasticity film for an all-solid-state battery stack having excellent performance in both compression and recovery properties in response to volume changes of the all-solid-state battery during charging and discharging.

Embodiments of the invention are capable of providing an all-solid-state battery stack comprising the high-elasticity film.

Embodiments of the invention are not limited to those mentioned above, and other objects and advantages of the invention not mentioned will be understood from the following description and will be more clearly understood from the embodiments of the invention. In addition, it will be readily apparent that the objects and advantages of the invention may be realized by means set forth in the claims and combinations thereof.

According to an embodiment of the invention, a high-elasticity film for an all-solid-state battery stack is disposed between all-solid-state batteries of an all-solid-state battery stack, wherein the elastic adhesive film comprises 10 to 40 wt% of a urethane acrylate binder, 55 to 82 wt% of an acrylate monomer, 0.1 to 2 wt% of an ultraviolet (UV) initiator, and 2.4 to 10 wt% of hollow particles, the urethane acrylate binder including an acrylate group at at least one terminal of polyurethane.

The urethane acrylate binder, the acrylate monomer, and the UV initiator may be bonded to each other.

The urethane acrylate binder and the acrylate monomer may be included in a weight ratio of 1:1.9 to 1:6.

The urethane acrylate binder may have a weight-average molecular weight of 5,000 to 50,000.

The acrylate monomer may include at least one selected from the group consisting of 4-hydroxybutyl acrylate, polyethylene glycol 600 diacrylate, 1,6-hexanediol diacrylate, 1,6-hexanediol ethoxylate diacrylate, 2-(2-ethoxyethoxy)ethyl acrylate, 2-hydroxyethyl acrylate, isobornyl acrylate, and dipentaerythritol hexaacrylate.

The high-elasticity adhesive film may further include a crosslinker having two or more acrylate functional groups.

The hollow particles may have particle sizes distributed between 10 and 50 µm.

The hollow particles may contain a hydrocarbon gas therein.

The high-elasticity adhesive film may have a thickness of 30 to 60 µm.

The high-elasticity adhesive film may have, at 2 MPa, a compressive strain of 45 to 60% and a recovery of 80 to 95%.

According to an embodiment of the invention, an all-solid-state battery stack includes a plurality of pouch cells and elastic pads disposed between the pouch cells, wherein each of the plurality of pouch cells includes a plurality of all-solid-state batteries and the aforementioned high-elasticity adhesive film disposed between the all-solid-state batteries.

An elastic sheet for an all-solid-state battery according to the invention exhibits excellent performance in both compression and recovery properties in response to volume changes of the all-solid-state battery during charging and discharging by controlling the contents of a urethane acrylate binder, an acrylate monomer, and hollow particles.

Since the elastic sheet for an all-solid-state battery according to the invention is a thin film having a thickness of several tens of micrometers, the integration density within an all-solid-state pouch cell comprising the same may be increased, thereby improving the performance of the all-solid-state battery.

In addition, the elastic sheet for an all-solid-state battery according to the invention has excellent stress relaxation properties and has a small temperature range deviation in elastic properties.

In addition to the effects described above, specific effects of the invention will be described in the following detailed description of embodiments of the invention.

### BRIEF DESCRIPTION OF THE DRAWING

FIG. 1 schematically illustrates an example of an all-solid-state battery stack applicable to the invention.
FIG. 2 schematically illustrates an example in which a support film or a protective film is disposed on both surfaces of a high-elasticity film.

### DETAILED DESCRIPTION

The aforementioned objects, features, and advantages will be described in detail below, and accordingly, those skilled in the art to which the invention pertains will be able to easily implement the technical spirit of the invention. In describing the invention, if it is determined that a detailed description of known technologies related to the invention may unnecessarily obscure the subject matter of the invention, the detailed description thereof will be omitted. Hereinafter, preferred embodiments according to the invention will be described in detail.

In the following description, when any configuration is described as being disposed "on (or under)" a component or "on an upper portion (or lower portion)" of a component, it may mean not only that any configuration is disposed in direct contact with an upper (or lower) surface of the component, but also that another configuration may be interposed between the component and any configuration disposed on (or under) the component.

As used herein, singular expressions include plural expressions unless the context clearly indicates otherwise. As used herein, terms such as "comprise," "have," or "include" should not be construed as necessarily including all of the components described in the specification, and it should be understood that some of the components may be omitted, or that additional components may be further included.

As used herein, the unit "parts by weight" may refer to a weight ratio among the respective components. As used herein, the term "acrylate" is intended to include methacrylate as well as acrylate.

As used herein, the strain value (compressive strain) and recovery (recovery rate) are expressed as a percentage (%).

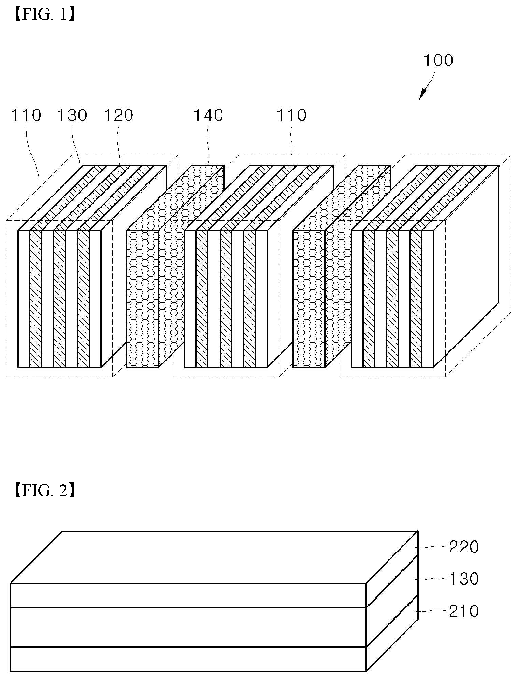

FIG. 1 schematically illustrates an example of an all-solid-state battery stack applicable to the invention.

Referring to FIG. 1, the illustrated all-solid-state battery stack 100 includes a plurality of pouch cells 110 and an elastic pad 140 disposed between the pouch cells.

The plurality of pouch cells 110 include a plurality of all-solid-state batteries 120 and an elastic adhesive film 130 disposed between the all-solid-state batteries.

In the all-solid-state battery 120, a positive electrode, a negative electrode, and electrolyte are all in a solid state. Such an all-solid-state battery has a high energy density and excellent safety. However, an all-solid-state battery may exhibit significant volume expansion or contraction depending on temperature or operating conditions.

Therefore, an elastic adhesive film having excellent compression and recovery properties is required to accommodate such volume changes of the all-solid-state battery.

The invention provides a high-elasticity adhesive film for an all-solid-state battery stack, the film being based on a urethane acrylate binder and having excellent compression and recovery properties.

The high-elasticity adhesive film 130 according to the invention is included in the pouch cell 110 and is a thin film having a thickness of about 30 to 60 µm. In this regard, the high-elasticity adhesive film 130 according to the invention is distinguished from the elastic pad 140 outside the pouch cell 110.

The high-elasticity adhesive film for an all-solid-state battery stack according to the invention comprises a urethane acrylate binder, an acrylate monomer, a UV initiator, and hollow particles. More specifically, the high-elasticity adhesive film for an all-solid-state battery stack according to the invention comprises 10 to 40 wt% of a urethane acrylate binder, 55 to 82 wt% of an acrylate monomer, 0.1 to 2 wt% of a UV initiator, and 2.4 to 10 wt% of hollow particles.

The urethane acrylate binder, the acrylate monomer, and the UV initiator may be bonded to each other. That is, the high-elasticity adhesive film for an all-solid-state battery stack according to the invention may be a cured product of a composition comprising 10 to 40 wt% of a urethane acrylate binder, 55 to 82 wt% of an acrylate monomer, 0.1 to 2 wt% of a UV initiator, and 2.4 to 10 wt% of hollow particles.

The curing reaction for obtaining the elastic adhesive film according to the invention may be as shown in the following example:

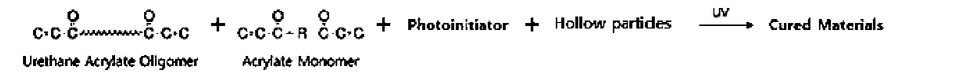

The urethane acrylate binder includes an acrylate group at at least one terminal of polyurethane. These urethane acrylate binder-based elastic adhesive films exhibited excellent elastic and recovery properties compared to acrylate binder-based elastic adhesive films.

The urethane acrylate binder is preferably included in an amount of 10 to 40 wt%, and more preferably 12 to 35 wt%, based on the total weight of the adhesive film. When the content of the urethane acrylate binder is less than 10 wt%, it is difficult to exhibit both compression and recovery properties. On the other hand, when the content of the urethane acrylate binder exceeds 40 wt%, flexibility may be reduced.

The urethane acrylate binder and the acrylate monomer may be included in a weight ratio of 1:1.9 to 1:6. When an insufficient or excessive amount of urethane acrylate binder is included outside the weight ratio range between the urethane acrylate binder and the acrylate monomer described above, compression or recovery properties may be reduced.

The urethane acrylate binder may have a weight-average molecular weight of 5,000 to 50,000. When the weight-average molecular weight of the urethane acrylate binder is less than 5,000, the length between crosslinked chains becomes short, which may result in poor shape retention at high temperatures. On the other hand, when the weight-average molecular weight of the urethane acrylate binder exceeds 50,000, the viscosity of the coating composition may increase, thereby affecting coatability. In addition, the increased length of crosslink chains may lead to a decrease in elastic properties.

The acrylate monomer serves to adjust the viscosityS of the coating composition, impart flexibility, and improve the crosslinking structure of the elastic adhesive film.

The acrylate monomer is preferably included in an amount of 55 to 82 wt% based on the total weight of the elastic adhesive film. When the content of the acrylate monomer is less than 55 wt%, the flexibility of the film may be reduced. On the other hand, when the content of the acrylate monomer exceeds 82 wt%, the content of the urethane acrylate binder is too low, making it difficult to exhibit both compression and recovery properties.

The acrylate monomer may include at least one selected from the group consisting of 4-hydroxybutyl acrylate (4-HBA), polyethylene glycol 600 diacrylate, 1,6-hexanediol diacrylate, 1,6-hexanediol ethoxylate diacrylate, 2-(2-ethoxyethoxy)ethyl acrylate, 2-hydroxyethyl acrylate, isobornyl acrylate (IBOA), and dipentaerythritol hexaacrylate. Among them, polyethylene glycol 600 diacrylate, 1,6-hexanediol diacrylate, 1,6-hexanediol ethoxylate diacrylate, and dipentaerythritol hexaacrylate may function as crosslinkers.

The acrylate monomer serving as a crosslinker may have two or more functional groups. The crosslinker having two or more acrylate functional groups may be included in an amount of about 10 wt% or less.

One or more known UV initiators, such as Irgacure 651, may be used as the UV initiator.

The UV initiator is preferably included in an amount of 0.1 to 2 wt% based on the total weight of the elastic adhesive film. When the content of the UV initiator is less than 0.1 wt%, the UV curing reaction may not proceed smoothly. On the other hand, when the content of the UV initiator exceeds 2 wt%, the physical properties of the elastic adhesive film may be reduced due to unreacted initiators.

The hollow particles serve to improve the compression and recovery properties of the high-elasticity adhesive film.

The hollow particles may be organic particles. The hollow particles may have particle sizes distributed between 10 and 50 µm. When the particle size of the hollow particles is less than 10 µm, compression properties may be reduced as the proportion occupied by the hollow particles within a film thickness (about 50 µm) decreases. On the other hand, when the particle size of the hollow particles exceeds 50 µm, a problem related to coating may arise due to particles larger than the film thickness (about 50 µm). Meanwhile, the hollow particles may have a D50 ratio of 20% or more.

Preferably, the hollow particles contain a hydrocarbon gas therein. The hydrocarbon gas within the hollow particles allows the hollow particles to maintain their shape effectively even under pressure.

In addition, inorganic nanoparticles having a size of 500 nm or less may be additionally used, if necessary.

Commercially available hollow particles may include MFL-81GCA (manufactured by Matsumoto Co., Ltd.), Microspheres 044 DET 20 d70, and Microspheres 920 DET 20 d70 (manufactured by Nouryon B.V.).

The hollow particles are preferably included in an amount of 2.4 to 10 wt%, and more preferably 3 to 7 wt%, based on the total weight of the elastic adhesive film. When the content of the hollow particles is less than 2.4 wt%, the effect of addition may be insufficient. On the other hand, when the content of the hollow particles is excessive, other physical properties, such as the adhesive properties of the adhesive film, may be impaired.

The thickness of the high-elasticity adhesive film according to the invention may be 30 to 60 µm. When the thickness of the high-elasticity adhesive film is less than 30 µm, it is difficult to exhibit sufficient compression properties. On the other hand, even if the thickness of the high-elasticity adhesive film exceeds 60 µm, no further effect is exhibited.

The high-elasticity adhesive film according to the invention may have, at 2 MPa, a compressive strain of 45 to 60% and a recovery of 80 to 95%. This means that both the compression properties under pressure and the recovery properties upon pressure release are excellent. In the invention, the compressive strain at 2 MPa refers to a strain value (compressive strain) (%) at a point of 2MPa on a strain-stress (S-S) curve when the elastic adhesive film is compressed to 4 MPa using a universal testing machine (UTM) and then returns to the original. In addition, the recovery at 2 MPa refers to a rate (%) between a stress at 2 MPa on a compression curve and a stress on a recovery curve having the same strain value as a strain at a point of 2 MPa on the compression curve, on a compression-recovery S-S curve to 4 MPa.

FIG. 2 schematically illustrates an example in which a support film or a protective film is disposed on both surfaces of a high-elasticity film.

A support film 210 or a protective film 220 may be disposed on at least one surface of the high-elasticity adhesive film 130.

### Examples

Hereinafter, the configuration and operation of the invention will be described in more detail with reference to preferred embodiments of the invention. However, these embodiments are presented as preferred examples of the invention and should not be construed as limiting the scope of the invention in any way.

### 1. Manufacturing of Elastic Adhesive Film

### (1) Comparative Examples 1 and 2

An elastic adhesive film having a thickness of about 50 µm was manufactured by UV-curing (UV curing conditions: 1000 mJ/10 mW) a composition comprising: PU2042Q (a urethane acrylate oligomer manufactured by Miwon Co., Ltd.) having a weight-average molecular weight of 15,000 as a urethane acrylate binder; Irgacure 651 as a UV initiator; 4-hydroxybutyl acrylate (an acrylate monomer manufactured by Osaka Organic Chemical Industry Ltd.; hereinafter referred to as 4-HBA) as an acrylate monomer; and acrylate monomers manufactured by Miwon Co., Ltd. (polyethylene glycol 600 diacrylate, 1,6-hexanediol diacrylate, 1,6-hexanediol ethoxylate diacrylate, isobornyl acrylate (hereinafter, IBOA), and dipentaerythritol hexaacrylate) in the amounts shown in Table 1.

### (2) Examples 1 to 3

An elastic adhesive film having a thickness of about 50 µm was manufactured by UV-curing (UV curing conditions: 1000 mJ/10 mW) a composition comprising: PU2042Q (a urethane acrylate oligomer manufactured by Miwon Co., Ltd.) having a weight-average molecular weight of 15,000 as a urethane acrylate binder; Irgacure 651 as a UV initiator; 4-hydroxybutyl acrylate (an acrylate monomer manufactured by Osaka Organic Chemical Industry Ltd.) as an acrylate monomer; acrylate monomers manufactured by Miwon Co., Ltd. (polyethylene glycol 600 diacrylate, 1,6-hexanediol diacrylate, 1,6-hexanediol ethoxylate diacrylate, isobornyl acrylate (IBOA), and dipentaerythritol hexaacrylate); and Microspheres 920 DET 20 d70 (manufactured by Nouryon B.V.) as hollow particles in the amounts shown in Table 1.

### (3) Comparative Examples 3 and 4

An elastic adhesive film having a thickness of about 50 µm was manufactured by UV-curing (UV curing conditions: 1000 mJ/10 mW) a composition comprising: PU2042Q (a urethane acrylate oligomer manufactured by Miwon Co., Ltd.) having a weight-average molecular weight of 15,000 as a urethane acrylate binder; Irgacure 651 as a UV initiator; 4-HBA as an acrylate monomer; acrylate monomers manufactured by Miwon Co., Ltd. (polyethylene glycol 600 diacrylate, 1,6-hexanediol diacrylate, 1,6-hexanediol ethoxylate diacrylate, IBOA, and dipentaerythritol hexaacrylate); and Microspheres 920 DET 20 d70 (manufactured by Nouryon B.V.) as hollow particles in the amounts shown in Table 1.

### (4) Comparative Example 5

An elastic adhesive film having a thickness of about 50 µm was manufactured by UV-curing (UV curing conditions: 1000 mJ/10 mW) a composition comprising: NC15 (manufactured by Aekyung Chemical Co., Ltd.) as an acrylate binder; Irgacure 651 as a UV initiator; 4-HBA as an acrylate monomer; and acrylate monomers manufactured by Miwon Co., Ltd. (polyethylene glycol 600 diacrylate, 1,6-hexanediol diacrylate, 1,6-hexanediol ethoxylate diacrylate, IBOA, and dipentaerythritol hexaacrylate) in the amounts shown in Table 1.

### (5) Comparative Examples 6 and 7

An elastic adhesive film having a thickness of about 50 µm was manufactured by UV-curing (UV curing conditions: 1000 mJ/10 mW) a composition comprising: PU2042Q (a urethane acrylate oligomer manufactured by Miwon Co., Ltd.) having a weight-average molecular weight of 15,000; NC15 (manufactured by Aekyung Chemical Co., Ltd.) as an acrylate binder; Irgacure 651 as a UV initiator; 4-HBA as an acrylate monomer; and acrylate monomers manufactured by Miwon Co., Ltd. (polyethylene glycol 600 diacrylate, 1,6-hexanediol diacrylate, 1,6-hexanediol ethoxylate diacrylate, IBOA, and dipentaerythritol hexaacrylate) in the amounts shown in Table 1.

### 2. Evaluation Method of Physical Properties

### (1) (Compressive Strength) Compressive strain and Recovery

At 2 MPa, the compressive strain (%) and the recovery (%) upon pressure release were measured by the following method. First, the elastic adhesive films according to the Examples and Comparative Examples were laminated onto test plates to a size of 3 cm × 3 cm and a thickness of 1.5 mm. Then, the compressive strain and recovery at a stress of 2 MPa were measured for each elastic adhesive film using a universal testing machine (UTM) (OTT-0006, manufactured by ORIENTALTM Co., Ltd.) by compressing the elastic adhesive film to 4 MPa in the thickness direction of the film and then returning it to the original. Specifically, a compressive strain at 2 MPa was defined as a strain value (%) at a stress point of 2 MPa on a stress-strain curve when the elastic adhesive film was compressed to 4 MPa in the thickness direction of the film. Further, the recovery at 2 MPa was defined as a rate (%) between a stress at 2 MPa on a compression curve and a stress on a recovery curve having the same strain value as a strain at a point of 2 MPa on the compression curve, on a compression-recovery strain-stress curve to 4 MPa.

### (2) Stress Relaxation Rate

The stress relaxation rate (cushion, %) was determined as a value calculated as a pressure ratio after laminating each elastic adhesive film to a size of 3 cm × 3 cm and a thickness of 1.5 mm and then maintaining each pressure of 0.5 MPa, 1.0 MPa, 1.5 MPa, and 2.0 MPa for 10 seconds using a UTM.

### (3) Temperature Range Deviation

The temperature range deviation (%) was determined as a value calculated from the differences in compressive strength measured by adjusting the surface temperature of a jig to 10°C, 45°C, and 60°C, based on the compressive strength evaluation at room temperature.

### 3. Results of Material Property Evaluation

The results of the material property evaluation are shown in Table 1.

**[Table 1]**

| Category | | Comp. Example 1 | Example 1 | Example 2 | Example 3 | Comp. Example 2 | Comp. Example 3 | Comp. Example 4 | Comp. Example 5 | Comp. Example 6 | Comp. Example 7 |
|---|---|---|---|---|---|---|---|---|---|---|---|
| Urethane acrylate binder (wt%) | | 20 | 14 | 24 | 33 | 10 | 63 | 76 | 0 | 5 | 27 |
| Acrylate binder (wt%) | | 0 | 0 | 0 | 0 | 0 | 0 | 0 | 30 | 25 | 53 |
| Acrylate monomer (wt%) | IBOA | 20 | 15 | 15 | 15 | 15 | 10 | 7 | 25 | 25 | 19 |
| | 4HBA | 59 | 63 | 51 | 46 | 72 | 22 | 12 | 44 | 44 | 0 |
| | Crosslinke r1 | 0 | 0 | 0 | 0 | 0 | 3 | 3 | 0 | 0 | 0 |
| | Crosslinke r2 | 0 | 0 | 2 | 2 | 2 | 0 | 0 | 0 | 0 | 0 |
| | Crosslinke r3 | 0 | 2 | 0 | 0 | 0 | 0 | 0 | 0 | 0 | 0 |
| | Total | 79 | 80 | 68 | 63 | 89 | 35 | 22 | 69 | 69 | 19 |
| UV Initiator (wt%) | | 1 | 1 | 1 | 1 | 1 | 1 | 1 | 1 | 1 | 1 |
| Hollow particles (wt%) | | 0 | 5 | 7 | 3 | 0 | 1 | 1 | 0 | 0 | 0 |
| Compressive strain (@ 2 MPa) (%) | | 19.1 | 51.4 | 53.7 | 49.4 | 19.4 | 28.8 | 30.9 | 28.9 | 27.3 | 22.4 |
| Recovery (@ 2 MPa) (%) | | 93.1 | 88.0 | 85.6 | 90.7 | 91.9 | 92.6 | 91.9 | 52.5 | 66.0 | 75.8 |
| Cushion (Stress relaxation rate) (%) | 0.5 MPa | 9.9 | 25.2 | 16.7 | N/M | N/M | N/M | N/M | 50.0 | 44.8 | 51.0 |
| | 1.0 MPa | 8.0 | 28.1 | 22.2 | | | | | 30.3 | 30.7 | 24.4 |
| | 1.5 MPa | 6.1 | 19.5 | 22.3 | | | | | 23.0 | 23.3 | 13.5 |
| | 2.0 MPa | 4.8 | 9.2 | 17.3 | | | | | 18.8 | 18.4 | 9.2 |
| Temperatu re range deviation (%) | Recovery | ±3 | ±3 | ±2 | ±2 | ±4 | ±8 | ±14 | - | -20 | -10 |

In Table 1, Crosslinker 1 is polyethylene glycol 600 diacrylate, Crosslinker 2 is 1,6-hexanediol diacrylate, and Crosslinker 3 is 1,6-hexanediol ethoxylate diacrylate.

Referring to Table 1, the elastic adhesive films according to Examples 1 to 3, in which the contents of the urethane acrylate binder, the acrylate monomer, and the hollow particles satisfy the ranges defined in the invention, exhibited excellent results in all cases, with a compressive strain of 45% or more under pressure at 2 MPa and a recovery of 80% or more upon pressure release.

The elastic adhesive films according to Comparative Examples 1 and 2, in which the urethane acrylate binder was used but the hollow particles were not included, exhibited excellent recovery properties, but exhibited a compressive strain well below 45% under pressure.

In addition, the elastic adhesive films according to Comparative Examples 3 to 4, in which the urethane acrylate binder was used but the hollow particles were included in a trace amount, and the contents of the urethane acrylate binder and the acrylate monomers failed to satisfy the ranges defined in the invention, exhibited very excellent recovery properties, but exhibited a compressive strain below 45% under pressure.

Further, the elastic adhesive film according to Comparative Example 5, in which only the acrylate binder was used instead of the urethane acrylate binder, exhibited a compressive strain under pressure at 2 MPa and a recovery rate upon pressure release that were below 45% and 80%, respectively.

Further, the elastic adhesive films according to Comparative Examples 6 and 7, in which both the urethane acrylate binder and the acrylate binder were used but hollow particles were not included, exhibited a compressive strain under pressure at 2 MPa and a recovery rate upon pressure release that were below 45% and 80%, respectively.

Meanwhile, the elastic adhesive films according to Examples 1 to 3 exhibited a stress relaxation rate of 20% or more within 0.5 to 1.5 MPa and about 10% at 2 MPa, which is a level capable of stably absorbing shocks applied to an all-solid-state battery when the all-solid-state battery is bonded to the elastic adhesive film according to the invention. Performance, particularly, compression and recovery properties, of the all-solid-state battery should be consistently maintained at various temperatures, and it may be considered that there is an advantage in maintaining the performance of the all-solid-state battery as a temperature range deviation (absolute value) becomes small. The elastic adhesive films according to Examples 1 to 3 exhibited relatively lower temperature range deviations compared to the Comparative Examples, indicating that the elastic adhesive films according to the invention may maintain their compression and recovery properties across a range of temperatures.

Table 2 shows the evaluation results of compressive strain and recovery according to the content of hollow particles. The types of the urethane acrylate binder, acrylate monomer, UV initiator, and hollow particles used in Table 2 and the method for manufacturing the elastic adhesive film are the same as those in Example 1.

Meanwhile, in Table 2, the content of hollow particles was varied while the combined content of the urethane acrylate binder, acrylate monomer, and UV initiator was maintained at 100 parts by weight, and the converted weight percentages based on the total weight of the adhesive film, as shown in Table 1, are also provided.

**[Table 2]**

| | Comp. Example 8 | Comp. Example 9 | Comp. Example 10 | Comp. Example 11 | Comp. Example 12 | Example 4 | Example 5 | Example 6 |
|---|---|---|---|---|---|---|---|---|
| Urethane acrylate binder (parts by weight) | 40 | 40 | 40 | 40 | 40 | 40 | 40 | 40 |
| Acrylate monomer (parts by weight) | 59 | 59 | 59 | 59 | 59 | 59 | 59 | 59 |
| UV Initiator (parts by weight) % | 1 | 1 | 1 | 1 | 1 | 1 | 1 | 1 |
| Hollow particles (parts by weight) | 0.8 | 1.2 | 1.5 | 1.7 | 2.0 | 2.5 | 2.7 | 3 |
| Hollow Particle Content (Converted wt%) | 0.8 | 1.2 | 1.5 | 1.7 | 2.0 | 2.4 | 2.6 | 2.9 |
| Compressive strain (@ 2 MPa) (%) | 29 | 34 | 38 | 40 | 41 | 47 | 48 | 50 |
| Recovery (@ 2 MPa) (%) | 93 | 92 | 91 | 91 | 91 | 93 | 92 | 93 |

It can be seen from Table 2 that the compressive strain varies significantly depending on the amount of hollow particles added. Specifically, the elastic adhesive films according to Comparative Examples 8 to 12, in which the amount of hollow particles added was less than 2.4 wt%, exhibited a compressive strain below 45%. In contrast, the elastic adhesive films according to Examples 4 to 6, in which the amount of hollow particles added was 2.4 wt% or more, exhibited a compressive strain of 45% or more.

While the invention has been described as above, the invention is not limited by the embodiments disclosed in the present specification, and it is obvious that various modifications may be made by those skilled in the art within the scope of the technical spirit of the invention. In addition, even if the effects of the invention resulting from its configurations were not explicitly described in the description of the embodiments of the invention, it is understood that effects predictable from the corresponding configurations should also be acknowledged.

### [Description of Reference Numerals]

100: All-solid-state battery stack
110: Pouch cell
120: All-solid-state battery
130: Elastic adhesive film
140: Elastic pad
210: Support film
220: Protective film

## Claims

1. A high-elasticity adhesive film for an all-solid-state battery stack, the high-elasticity adhesive film being disposed between all-solid-state batteries of the all-solid-state battery stack,
wherein the elastic adhesive film comprises 10 to 40 wt% of a urethane acrylate binder, 55 to 82 wt% of an acrylate monomer, 0.1 to 2 wt% of an ultraviolet (UV) initiator, and 2.4 to 10 wt% of hollow particles, the urethane acrylate binder including an acrylate group at at least one terminal of polyurethane.

2. The high-elasticity adhesive film for an all-solid-state battery stack according to claim 1, wherein the urethane acrylate binder, the acrylate monomer, and the UV initiator are bonded to each other.

3. The high-elasticity adhesive film for an all-solid-state battery stack according to claim 1, wherein the urethane acrylate binder and the acrylate monomer are included in a weight ratio of 1:1.9 to 1:6.

4. The high-elasticity adhesive film for an all-solid-state battery stack according to claim 1, wherein the urethane acrylate binder has a weight-average molecular weight of 5,000 to 50,000.

5. The high-elasticity adhesive film for an all-solid-state battery stack according to claim 1, wherein the acrylate monomer includes at least one selected from the group consisting of 4-hydroxybutyl acrylate, polyethylene glycol 600 diacrylate, 1,6-hexanediol diacrylate, 1,6-hexanediol ethoxylate diacrylate, 2-(2-ethoxyethoxy)ethyl acrylate, 2-hydroxyethyl acrylate, isobornyl acrylate, and dipentaerythritol hexaacrylate.

6. The high-elasticity adhesive film for an all-solid-state battery stack according to claim 1, further comprising a crosslinker having two or more acrylate functional groups.

7. The high-elasticity adhesive film for an all-solid-state battery stack according to claim 1, wherein the hollow particles have particle sizes distributed between 10 and 50 µm.

8. The high-elasticity adhesive film for an all-solid-state battery stack according to claim 1, wherein the hollow particles contain a hydrocarbon gas therein.

9. The high-elasticity adhesive film for an all-solid-state battery stack according to claim 1, wherein the high-elasticity adhesive film has a thickness of 30 to 60 µm.

10. The high-elasticity adhesive film for an all-solid-state battery stack according to claim 1, wherein the high-elasticity adhesive film has, at 2 MPa, a compressive strain of 45 to 60% and a recovery of 80 to 95%.
